# EUROPÄISCHE PATENTSCHRIFT

(11) **EP 2 205 422 B1**
(45) Veröffentlichungstag und Bekanntmachung des Hinweises auf die Patenterteilung: **06.11.2013**
(21) Anmeldenummer: 08802705.7
(22) Anmeldetag: 24.09.2008
(51) Int. Cl.: B29C 47/10, B30B 15/30, B01F 15/02, B65D 88/68, B29B 7/24, B65G 11/20, B29B 7/60, B29C 31/02

(54) **VORRICHTUNG ZUM ZUFÜHREN VON KURZEN FASERN**
DEVICE FOR FEEDING SHORT FIBERS
DISPOSITIF D'AMENÉE DE FIBRES COURTES

(30) Priorität: 28.09.2007 DE 102007047548
(43) Veröffentlichungstag der Anmeldung: 14.07.2010
(73) Patentinhaber: Fraunhofer-Gesellschaft zur Förderung der angewandten Forschung e.V., 80686 München (DE)
(72) Erfinder: BUSCH, Michael, 06130 Halle (DE); STACHE, Peter, 04316 Leipzig (DE); BRINK, Lars, 06343 Möllendorf (DE)
(74) Vertreter: Pfenning, Meinig & Partner GbR
(86) Internationale Anmeldenummer: PCT/EP2008/008276
(87) Internationale Veröffentlichungsnummer: WO 2009/043569

(56) Entgegenhaltungen:
- DE-A1- 3 234 005
- DE-A1- 4 236 676
- DE-A1- 10 201 869
- DE-U1- 20 004 452
- FR-E- 28 520
- US-A- 1 153 103
- US-A- 2 923 439
- US-A- 5 257 438

## Beschreibung

Die Erfindung betrifft eine Vorrichtung zum Zuführen von kurzen Fasern, insbesondere Schnittfasern in einen Extruder oder eine Maschine zur Weiterverarbeitung der Fasern nach dem Oberbegriff des Hauptanspruchs.

Für die Herstellung von faserverstärkten Kunststoffen werden die Fasern einem Compoundierextruders mit einer Fördereinrichtung in geschnittener Form zugeführt. Das Zuführen geschnittener, schlecht rieselfähiger Fasern in einen Compoundierextruder stellt ein bis heute nur unzureichend gelöstes Problem dar, da solche Fasern zur Brückenbildung neigen und sich damit nicht kontinuierlich und gleichmäßig fördern lassen. Des Weiteren stellen die geringen Schüttgewichte, wie sie z.B. bei geschnittenen Textil- oder Naturfasern mit teilweise nur 30 g/l anzutreffen sind, für die bei der Compoundierung angestrebten hohen Extruderdurchsätze ein Problem dar. Um die großen Volumina aufgrund der niedrigen Schüttgewichte in einer dem Extruderdurchsatz entsprechenden Menge in die kleine Öffnung des Extruders zu fördern, müssen die Fasern in der Fördereinrichtung gefördert und zugleich verdichtet werden.

Üblicherweise werden zur Dosierung von geschnittenen Fasern konventionelle Zweiwellenfördereinrichtungen oder spezielle Stopfwerke verwendet. die zwei Wellenfördereinrichtungen, die meist seitlich am Extruder an einem speziellen offenen Extruder-Zylinderelement angekoppelt sind und diesen so von der Seite befüllen, bestehen aus einem Zuführbehälter mit starren Wänden, in dem sich ein Rührer befinden kann, auf dessen Grund zwei gleich- oder gegendrehende Schnecken in einem Rohr laufen, das in den Extruder mündet (DE 102 01 869 B4). Die Schnecken befördern das Material aus dem Zuführbehälter in den Extruder. Der Rührer, falls ein solcher vorhanden ist, soll die Brückenbildung verhindern und die Bewegung des Materials zu den fördernden Schnecken unterstützen. Hat das Material eine geringe Schüttdichte, neigt es dazu, auf den Schnecken zu schwimmen, d.h. es wird von diesen sowohl bezüglich der Menge als auch der Gleichmäßigkeit nicht hinreichend eingezogen und in den Extruder gefördert.

Stopfwerke, die vorzugsweise auf dem Extruder an einem oben offenen Extruderzylinderelement angebracht sind und diesen von oben befüllen, bestehen aus einem konischen trichterförmigen Behälter mit starren Wänden, in dessen Innerem in der Mitte drehende, sich konisch nach unten zum Ausgang des Stopfwerks hin verjüngende Schnecken angeordnet sind (DE 30 31 201 C1). Die konisch ausgeführte Schnecke soll das Mate-rial auf dem Weg zum Ausgang des Stopfwerks komprimieren und zwangsweise in den Extruder befördern. Es sind auch Ausführungen mit einem konischen Behälter mit starren Wänden und zwei im Inneren in der Mitte des Behälters drehenden parallelen Schnecken mit einem Rührwerk, das die Brückenbildung verhindern soll, bekannt.

Die Druckschrift DE20004452U1 zeigt eine Strangpresse für mit bindemitteln gemischte pflanzliche Kleinteile zur Bildung kompakter Stränge gemäß dem Oberbegriff des Anspruchs 1.

Die Druckschrift DE4236676A1 zeigt eine Verbrennungsanlage für feste Brennstoffe mit einer Vorrichtung zum Zerkleinern von Abfall und zum Füllen von Abfall in einen Schacht.

Die Druckschrift FR28520E10 zeigt eine Teigpresse mit einem mit einer Einfüllöffnung für Teig und einer Ausgangsöffnung für aus dem Teig geformte Teigwaren versehenen Behälter.

Die Druckschrift DE3234005A1 zeigt eine Übergabevorrichtung zum Abgeben von Schüttgut auf ein Förderband.

Die bekannten Fördervorrichtungen haben die Nachteile einer zu geringen Förderleistung, einer ungleichmässigen Komprimierung und Förderung und daraus resultierenden pulsierenden Förderung. Bei sehr geringen Schüttgewichten drehen sich die Schnecken "leer" über das Material, so dass keine Förderung stattfindet und das Material sich im Behälter aufstaut.

Der Erfindung liegt daher die Aufgabe zugrunde, eine Vorrichtung zum Zuführen und Fördern von kurzen Fasern, insbesondere Schnittfasern, in einen Extruder oder eine Maschine zur Weiterverarbeitung der Fasern zu schaffen, die eine gleichmässige und kontinuierliche Förderung auch bei geringer Schüttdichte und bei geringem Schüttgewicht zu schaffen, wobei gleichzeitig hohe Durchsätze erreicht werden sollen.

Diese Aufgabe wird erfindungsgemäss durch die kennzeichnenden Merkmale des Hauptanspruchs in Verbindung mit den Merkmalen des Oberbegriffs gelöst.

Durch die in den Unteransprüchen angegebenen Massnahmen sind vorteilhafte Weiterbildungen und Verbesserungen möglich.

Dadurch, dass eine Förderschnecke im Inneren eines Behälters mit mindestens zwei geneigten Behälterwänden angeordnet ist und die mindestens zwei geneigten Behälterwände als Bandfördereinrichtungen ausgebildet sind, die die Bewegung der Fasern zur Ausgangsöffnung des Behälters hin unterstützen, werden die Fasern kontinuierlich und gleichmäßig in einen Extruder auch bei geringer Schüttdichte eingebracht, wobei die Fasern durch die Bandfördereinrichtungen nach unten in Richtung Ausgang transportiert und an die Förderschnecke gepresst und verdichtet werden und selbst schlecht fließende Fasern zwangsweise gefördert werden.

Unter Fasern sollen jede Art von faserförmigen Materialien unterschiedlicher Länge, auch Schnipsel verstanden werden, wobei sowohl Naturfasern als auch synthetische Fasern berücksichtigt werden sollen.

Besonders vorteilhaft ist, dass der Abstand und/oder die Neigung der die Behälterwände bildenden Bandfördereinrichtungen, die als endlos umlaufende flexible Transportbänder realisiert sind, bezüglich einer durch die Achse der Förderschnecke gehenden und zwischen den geneigten Behälterwänden gedachte Mittelebene einstellbar sind, da auf diese Weise die Verdichtung der Fasern einstellbar ist. Durch zusätzlich Regelung der Bandgeschwindigkeit der Transportbänder und/oder der Drehzahl der mindestens einen Schnecke lässt sich in vorteilhafter Weise der Durchsatz regeln, wobei eine Steuereinrichtung diese Steuerung/Regelung übernimmt.

In vorteilhafter Weise ist die Oberfläche der flexiblen Transportbänder aufgeraut und/oder ist mit Mitnehmerelementen, wie Querstreben versehen, wodurch die Fördereigenschaften der Bänder und Mitnahme der Fasern in Richtung des Ausgangs verbessert wird.

Durch Vorsehen von Abstreifern an der Stelle, an der die Transportbänder den Behälterraum verlassen, wird verhindert, dass das Fasermaterial aus dem Behälterraum gelangt.

Die Förderschnecken sind als gleichsinnig drehendes Schneckenpaar ausgebildet sind, die Förderteile mit einem dicht kämmenden Profil aufweisen, da durch das dichte Kämmen der Teile und das gegenseitige Abstreifen zwischen beiden Schecken eine Selbstreinigung der Schecken ermöglicht wird.

Zusammenfassend ist festzustellen, dass mit der erfindungsgemäßen Anordnung des Behälters mit als Bandfördereinrichtungen ausgebildeten geneigten Behälterwänden und zwischen ihnen angeordneter Förderschnecke, vorzugsweise zwei kämmender Förderschnecken, wobei die Behälterwände bzw. die Transportbänder hinsichtlich ihres Abstands in Bezug auf die Förderschnecken einstellbar sind, eine optimale Verpressung für das zu dosierende Fasermaterial und eine gleichmäßige und kontinuierliche Förderung des Materials ohne Brückenbildung erreicht wird.

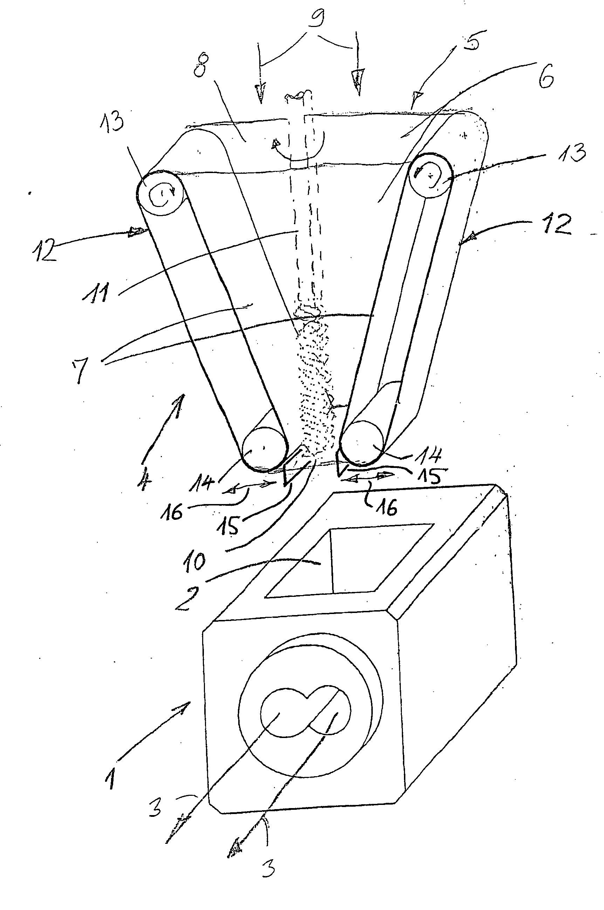

Ein Ausführungsbeispiel der Erfindung ist in der Zeichnung dargestellt und wird in der nachfolgenden Beschreibung näher erläutert. Die einzige Figur zeigt schematisch eine Anordnung aus der erfindungsgemäßen Zufuhrvorrichtung mit darunter liegendem Extruder.

In der Figur ist schematisch ein Extruder 1 dargestellt, der eine Öffnung 2 zum Zuführen von Fasermaterial in eine vom Extruder transportierte Schmelze, vorzugsweise aus einem Polymer-Gemisch, wobei der Austrag des mit dem zuzuführenden Fasermaterial vermischten Polymer-Gemischs durch die Pfeile 3 angedeutet ist. Die erfindungsgemäße Fördervorrichtung 4, die rein schematisch dargestellt ist, wird an dem Extruder 1 über der Öffnung 2 liegend befestigt, was in der Figur nicht näher dargestellt ist.

Die Förder- oder Zuführvorrichtung 4 weist einen Behälter 5 auf, der in der Darstellung zwei parallele Wände 6 und zwei geneigte Wände 7 aufweist. Nach oben ist der Behälter 5 offen, d.h. mit einer Dosieröffnung 8 versehen, durch das das Fasermaterial, vorzugsweise Schnittfasern zugeführt wird, wie durch die Pfeile 9 angedeutet ist. Selbstverständlich kann die Dosieröffnung im oberen Bereich auch seitlich in den Wänden 6 vorgesehen sein. Am unteren Ende des Behälters, der Extruderöffnung 2 gegenüberliegend, ist eine Ausgangsöffnung 10 für die Einspeisung der verpressten Fasern in die Extruderöffnung 2 vorgesehen.

Mittig in dem Behälter 5 sind zwei parallel drehende Förderschnecken 11 angeordnet, die von mindestens einem nicht dargestellten Motor angetrieben werden, wobei vorzugsweise das Schneckenpaar 11 mit Förderteilen mit einem dicht kämmenden Profil versehen ist.

Die geneigten Wände 7 werden von Transportbändern 12 gebildet, die um von einem nicht dargestellten Motor angetriebene Rollen 13 oder sonstige drehende Antriebselemente und mitdrehende Rollen 14 oder dergleichen endlos umlaufen. Die Motoren zum Antreiben der Transportbänder 12 und der Förderschnecken 11 sind mit einer Steuer- und Regeleinheit verbunden, die beispielsweise einen Frequenzumformer aufweist, über den die Bandgeschwindigkeit und die Drehzahl der Schnecken 11 vorzugsweise stufenlos regelbar sind.

Die Transportbänder 12, die flexibel sind, weisen eine aufgeraute Oberfläche auf oder sind mit Mitnehmerelementen, z.B. Querstreben versehen, wodurch eine Mitnahme des Fasermaterials im Behälter in Richtung der Ausgangsöffnung 10 verbessert wird. Am unteren Ende des Behälters 5 im Bereich der Mitnehmerrollen 14 sind Abstreifer 15 vorgesehen, die das Fasermaterial, was an den Bändern kleben könnte, zur Ausgangsöffnung 10 bzw. zur Extruderöffnung 2 hin abstreifen.

Ein besonderes Merkmal der Fördervorrichtung 4 ist, dass die geneigten Wände 7, d.h. die Transportbänder 12 in ihrem Abstand zu den Förderschnecken 11, d.h. zu einer gedachten Mittelebene, die durch die Achsen der Förderschnecken 11 geht, einstellbar sind, was durch die Doppelpfeile 16 angedeutet ist. Durch diese Veränderbarkeit des Abstands, die stufenlos oder auch in vorgegebenen Abstandsintervallen vorgenommen werden kann, ist die Verdichtung des Fasermaterials einstellbar. Es ist auch denkbar, dass die Neigung der geneigten Wände 7 bzw. der Transportbänder 12 veränderbar und einstellbar ist.

Für den Betrieb der Zufuhrvorrichtung 4 wird das in den Extruder 1 zuzuführende Fasermaterial, im vorliegenden Ausführungsbeispiel von oben (siehe Pfeile 9) in den Behälter eindosiert. Im Behälter wird das Material von den Transportbändern 12 von der aufgerauten Oberfläche bzw. den Mitnehmerelementen nach unten in Richtung der Ausgangsöffnung 10 mitgenommen. Dabei wird durch die verstellbare, sich verringernde Breite des Einfallspalts zwischen den Schnecken 11 und den Behälterwänden 8, 7 bzw. 12 eine für das zu dosierende Material optimale Verpressung erreicht. Die Förderung des sich verdichtenden Materials wird durch das drehende Förderschneckenpaar 11 unterstützt, das das verdichtete Fasermaterial anschließend durch die Ausgangsöffnung 10 in die Extruderöffnung 2 abtransportiert bzw. ausgepresst. Auch schlecht fließende Fasern werden auf diese Weise zwangsläufig dem Extruder zugeführt.

Selbstverständlich kann die Zuführvorrichtung 4 in ihren einzelnen Konstruktionsteilen verändert werden, beispielsweise kann nur eine Förderschnecke oder auch mehr als zwei vorgesehen werden, wobei auch die Drehrichtungen unterschiedlich sein können. Auch können die Antriebs- und Umlenkelemente 13, 14 entsprechend üblicher Konstruktionen ausgeführt sein und andere konstruktive Abwandlungen sind möglich.

## Patentansprüche

1. Vorrichtung zum Zuführen von kurzen Fasern, insbesondere Schnittfasern, in einen Extruder oder eine Maschine zur Weiterverarbeitung der Fasern, mit einem mit einer Dosieröffnung (8) und einer Ausgangsöffnung (10) versehenen Behälter (5), der sich durch mindestens zwei geneigte Behälterwände (7) verjüngt, wobei zwischen den geneigten Behälterwänden (7) Förderschnecken (11) zum Fördern von in den Behälter (5) eindosierten Fasern angeordnet sind und die mindestens zwei geneigten Behälterwände (7) als Bandfördereinrichtungen (12, 13, 14) ausgebildet sind,
**dadurch gekennzeichnet,**
**dass** sich der Behälter (5) durch die Behälterwände (7) zur Ausgangsöffnung (10) verjüngt und die Bandfördereinrichtungen (12, 13, 14) die Bewegung der Fasern zur Ausgangsöffnung (10) hin unterstützen, wobei die Förderschnecken (11) als gleichsinnig drehendes Schneckenpaar ausgebildet sind, die Förderteile mit einem dicht kämmenden Profil aufweisen.

2. Vorrichtung nach Anspruch 1, **dadurch gekennzeichnet, dass** mehrere Förderschnecken (11), vorzugsweise parallel drehend, zwischen den als Bandfördereinrichtungen (12, 13, 14) ausgebildeten Behälterwänden (7) angeordnet sind.

3. Vorrichtung nach Anspruch 1 oder Anspruch 2, **dadurch gekennzeichnet, dass** die Bandfördereinrichtungen als endlos umlaufende Transportbänder (12) ausgebildet sind.

4. Vorrichtung nach einem der Ansprüche 1 bis 3, **dadurch gekennzeichnet, dass** der Abstand und/oder die Neigung der als Bandfördereinrichtungen (12, 13, 14) ausgebildeten Behälterwände bezüglich einer durch die Achse der Förderschnecke (11) gehenden und zwischen den geneigten Behälterwänden (7) gedachten Mittelebene einstellbar sind.

5. Vorrichtung nach einem der Ansprüche 1 bis 4, **dadurch gekennzeichnet, dass** die Oberfläche der Transportbänder (12) aufgeraut ist und/oder mit Mitnehmerelementen, wie Querstreben, versehen ist.

6. Vorrichtung nach einem der Ansprüche 1 bis 5, **dadurch gekennzeichnet, dass** den Bandfördereinrichtungen (12, 13, 14) und der mindestens einen Förderschnecke (11) eine Steuereinrichtung zur Steuerung/Regelung des Durchsatzes an Fasern zugeordnet ist.

7. Vorrichtung nach Anspruch 6, **dadurch gekennzeichnet, dass** der Durchsatz abhängig von der Geschwindigkeit der Bandfördereinrichtungen und/oder der Drehzahl der mindestens einen Förderschnecke (11) ist.

8. Vorrichtung nach Anspruch 6 oder Anspruch 7, **dadurch gekennzeichnet, dass** die Steuereinrichtung einen Frequenzumformer zur Ansteuerung der Motoren der Bandfördereinrichtungen und/oder der mindestens einen Förderschnecke umfasst.

9. Vorrichtung nach einem der Ansprüche 1 bis 8, **dadurch gekennzeichnet, dass** im Bereich der Ausgangsöffnung (10) Abstreifer angeordnet sind.

## Claims

1. A device for supplying short fibres, in particular staple fibres, into an extruder or a machine for further processing of the fibres, with a container (5) provided with a metering opening (8) and an exit opening (10), which tapers by at least two inclined container walls (7), with worm conveyors (11) being arranged between the inclined container walls (7) for conveying fibres which are metered into the container (5), and the at least two inclined container walls (7) being formed as belt conveyor means (12, 13, 14),
**characterised in that**
the container (5) tapers by the container walls (7) to the exit opening (10) and the belt conveyor means (12, 13, 14) support the movement of the fibres towards the exit opening (10), the worm conveyors (11) being formed as a pair of worms which rotate in the same direction and which have conveying parts with a closely-meshing profile.

2. A device according to Claim 1, **characterised in that** a plurality of worm conveyors (11), preferably rotating in parallel, are arranged between the container walls (7) which are formed as belt conveyor means (12, 13, 14).

3. A device according to Claim 1 or Claim 2, **characterised in that** the belt conveyor means are formed as endlessly revolving conveyor belts (12).

4. A device according to one of Claims 1 to 3, **characterised in that** the spacing and/or the inclination of the container walls which are formed as belt conveyor means (12, 13, 14) are adjustable with respect to an imaginary centre plane which passes through the axis of the worm conveyor (11) and between the inclined container walls (7).

5. A device according to one of Claims 1 to 4, **characterised in that** the surface of the conveyor belts (12) is roughened and/or is provided with entraining elements, such as transverse struts.

6. A device according to one of Claims 1 to 5, **characterised in that** a control means for controlling/regulating the throughput of fibres is associated with the belt conveyor means (12, 13, 14) and the at least one worm conveyor (11).

7. A device according to Claim 6, **characterised in that** the throughput is dependent on the speed of the belt conveyor means and/or the speed of rotation of the at least one worm conveyor (11).

8. A device according to Claim 6 or Claim 7, **characterised in that** the control means comprises a frequency converter for controlling the motors of the belt conveyor means and/or of the at least one worm conveyor.

9. A device according to one of Claims 1 to 8, **characterised in that** scrapers are arranged in the region of the exit opening (10).

## Revendications

1. Dispositif d'amenée de fibres courtes, en particulier de fibres découpées, dans une extrudeuse ou une machine de traitement des fibres, comprenant un réservoir (5) muni d'une ouverture de dosage (8) et d'une ouverture de sortie (10) qui va en rétrécissant en raison d'au moins deux parois de réservoir inclinées (7), des transporteurs à vis sans fin (11) étant agencés entre les parois de réservoir inclinées (7) pour transporter les fibres dosées dans le réservoir (5) et les au moins deux parois de réservoir inclinées (7) étant façonnées comme dispositifs de transport par bande (12, 13, 14),
**caractérisé en ce**
**que** le réservoir (5) va en rétrécissant jusqu'à l'ouverture de sortie (10) en raison des parois de réservoir (7) et les dispositifs de transport par bande (12, 13, 14) favorisent le déplacement des fibres en direction de l'ouverture de sortie (10), les transporteurs à vis sans fin (11) étant façonnés comme paire de vis sans fin tournant dans le même sens, qui présentent des éléments transporteurs dotés d'un profil de peignage serré.

2. Dispositif selon la revendication 1, **caractérisé en ce que** plusieurs transporteurs à vis (11), tournant de préférence en parallèle, sont agencés entre les parois de réservoir (7) façonnées comme dispositifs de transport par bande (12, 13, 14).

3. Dispositif selon la revendication 1 ou 2, **caractérisé en ce que** les dispositifs de transport par bande sont façonnés comme bandes de transport (12) circulant sans fin.

4. Dispositif selon l'une quelconque des revendications 1 à 3, **caractérisé en ce que** la distance et/ou l'inclinaison des parois de réservoir façonnées comme dispositifs de transport par bande (12, 13, 14) par rapport à un plan central passant à travers l'axe des transporteurs à vis sans fin (11) et considéré entre les parois de réservoir inclinées (7) sont réglables.

5. Dispositif selon l'une quelconque des revendications 1 à 4, **caractérisé en ce que** la surface des bandes de transport (12) est rendue rugueuse et/ou dotée d'éléments d'entraînement, comme des entretoises transversales.

6. Dispositif selon l'une quelconque des revendications 1 à 5, **caractérisé en ce qu'**un dispositif de commande destiné à commander/régler le débit de fibres est associé aux dispositifs de transport par bande (12, 13, 14) et à l'au moins un transporteur à vis sans fin (11).

7. Dispositif selon la revendication 6, **caractérisé en ce que** le débit dépend de la vitesse des dispositifs de transport par bande et/ou de la vitesse de rotation de l'au moins un transporteur à vis sans fin (11).

8. Dispositif selon la revendication 6 ou 7, **caractérisé en ce que** le dispositif de commande comprend un convertisseur de fréquence destiné à commander les moteurs des dispositifs de transport par bande et/ou de l'au moins un transporteur à vis sans fin.

9. Dispositif selon l'une quelconque des revendications 1 à 8, **caractérisé en ce que** des racloirs sont agencés dans la zone de l'ouverture de sortie (10).
